# EUROPÄISCHE PATENTSCHRIFT

(11) **EP 1 752 028 B1**
(45) Veröffentlichungstag und Bekanntmachung des Hinweises auf die Patenterteilung: **13.08.2008**
(21) Anmeldenummer: 06016052.0
(22) Anmeldetag: 02.08.2006
(51) Int. Cl.: A01C 7/04

(54) **Pneumatische Einzelkornsämaschine**
Pneumatic single-grain seeder
Semoir monograine pneumatique

(30) Priorität: 12.08.2005 DE 102005038155
(43) Veröffentlichungstag der Anmeldung: 14.02.2007
(73) Patentinhaber: Amazonen-Werke H. Dreyer GmbH & Co. KG, 49205 Hasbergen (DE)
(72) Erfinder: Jan Johannaber, Stefan, 49536 Lienen (DE)

(56) Entgegenhaltungen:
- EP-A2- 0 705 532
- DE-A1- 2 552 067
- GB-A- 2 328 051
- US-A- 3 698 332
- US-B1- 6 516 733

## Beschreibung

Die Erfindung betrifft eine pneumatische Einzelkornsämaschine gemäß des Oberbegriffes des Patentanspruches 1.

Eine derartige Einzelkornsämaschine ist beispielsweise durch die DE 25 52 067 A1 bekannt. Diese pneumatische Einzelkornsämaschine weist eine Vereinzelungstrommel auf. Auf dem Außenbereich der Vereinzelungstrommel sind Rillen angebracht, in welche die Perforationen, die mit einem Druckunterschied beaufschlagt werden und an die sich die Samenkörner beim Führen durch einen Saatgutvorrat anlagern, angeordnet sind. Die Anordnung der Perforationen in den vertieft gelegenen Rillen bereitet insbesondere bei großkalibrigen Saatgütern Probleme, auch ist ein Abstreifen von überflüssigen an den Perforationen bei Mehrfachbelegung angelagerten Samenkörnern nur sehr schwierig möglich.

Der Erfindung liegt die Aufgabe zugrunde, eine verbesserte Vereinzelungstrommel für Einzelkornsämaschinen zu schaffen, um eine verbesserte Anlagerung der Saatkörner an den Perforierungen der Trommel und eine verbesserte Vereinzelung der Samenkörner zu erreichen.

Diese Aufgabe wird erfindungsgemäß durch das kennzeichnende Merkmal des Patentanspruches 1 gelöst. Infolge dieser Maßnahme, dass die Perforationsreihen in dem erhöht ringförmig umlaufenden Vereinzelungsgürtel gegenüber der Trommeloberfläche verlaufend angeordnet sind, ergibt sich in überraschender Weise eine verbesserte Aufnahme der Saatkörner aus dem Saatgutvorrat und eine verbesserte vereinzelte Anlagerung der Körner an den Perforationen.

In einer Ausführungsform ist vorgesehen, dass die Vereinzelungsgürtel im Querschnitt dachförmig ausgebildet sind, dass in beiden Seitendachflächen die Perforationslöcher angeordnet sind. Hierdurch ergibt sich die Möglichkeit, die Perforierung in einem größeren Abstand zueinander anzuordnen, so dass eine verbesserte Anlagerung und Vereinzelung der Saatkörner erreicht wird. Hierbei sind in vorteilhafter Weise die auf beiden Seiten des Vereinzelungsgürtels angeordneten Perforationslöcher versetzt zueinander angeordnet.

In einer anderen Ausführungsform ist vorgesehen, dass die Vereinzelungsgürtel eine erhöht parallel zur Trommeloberfläche umlaufende Ringfläche aufweisen, dass in der Ringfläche die Perforationslöcher angeordnet sind. Hierdurch ergibt sich ebenfalls eine verbesserte Anlagerung der Saatkörner weil die Breite des Vereinzelungsgürtels auf den Durchmesser der in der Ringfläche angeordneten Perforationslöcher abgestimmt wird.

Auch ist es möglich, dass in der Ringfläche zwei Perforationsreihen für eine vereinzelte Saatreihe angeordnet sind und dass die Perforationslöcher der beiden Perforationsreihen einer Ringfläche versetzt zueinander angeordnet sind. Auch hierdurch ergibt sich ein größerer Abstand der aufeinander folgenden Perforationen einer Reihe zueinander.

In einer anderen Ausführungsform ist vorgesehen, dass die Vereinzelungsgürtel zwei seitlich aus der Trommeloberfläche herausragende Seitenflächen aufweisen, dass in den Seitenflächen die Perforationsfläche angeordnet sind, dass die Perforationslöcher versetzt zueinander angeordnet sind. Bei dieser Anordnung können die von den in den Seitenflächen angeordneten Perforationsreihen überschüssigen Saatkörner vorteilhaft abgestreift und in den Saatgutvorrat zurückfallen.

Die vereinzelte Anlage der Saatkörner an den Perforationsreihen der einzelnen Vereinzelungsgürtel wird dadurch begünstigt, dass der Abstand zwischen den einzelnen Vereinzelungsgürteln größer ist als das Maß um welches die Vereinzelungsgürtel aus der Trommeloberfläche herausragen.

Um die vereinzelten Saatkörner eines Vereinzelungsgürtels einer Säausbringeinheit zuführen zu können, ist vorgesehen, dass den Perforationsreihen eines Vereinzelungsgürtels ein von der Vereinzelungstrommel zu der Ablageeinrichtung der Einzelkornsämaschine führende Ausbringleistung zugeordnet ist.

Weitere Einzelheiten der Erfindung sind den übrigen Unteransprüchen, der Beispielsbeschreibung und den Zeichnungen zu entnehmen. Hierbei zeigen
- Fig. 1: die Vereinzelungstrommel in perspektivischer Darstellung,
- Fig. 2: das für eine Saatreihe aus zwei Teilsegmenten zusammengesetzte Segment der Vereinzelungstrommel in der Ansicht von vorne,
- Fig. 3: das für eine Saatreihe aus zwei Teilsegmenten zusammengesetzte Segment der Vereinzelungstrommel in perspektivischer Darstellung,
- Fig. 4: ein Teilsegment der Vereinzelungstrommel in der Vorderansicht,
- Fig. 5: ein Teilsegment in perspektivischer Darstellung,
- Fig. 6: die Ausgestaltung der Verbindung der Perforation mit dem Trommelinnenraum in Seitenansicht,
- Fig. 7: die Perforation in der Einzelheit VII aus Fig. 5,
- Fig. 8: die Einzelheit der Perforation der Einzelheit VIII aus Fig. 3,
- Fig. 9: ein anderes für eine Saatreihe aus zwei Teilsegmenten zusammengesetzte Segment der Vereinzelungstrommel in der Ansicht von vorne,
- Fig. 10: das für eine Saatreihe aus zwei Teilsegmenten zusammengesetzte Segment der Vereinzelungstrommel gemäß Fig. 9 in perspektivischer Darstellung,
- Fig. 11: ein weiteres für eine Saatreihe aus zwei Teilsegmenten zusammengesetzte Segment der Vereinzelungstrommel in der Ansicht von vorne und
- Fig. 12: das für eine Reihe aus zwei Teilsegmenten zusammengesetzte Segment der Vereinzelungstrommel gemäß Fig. 11 in perspektivischer Darstellung.

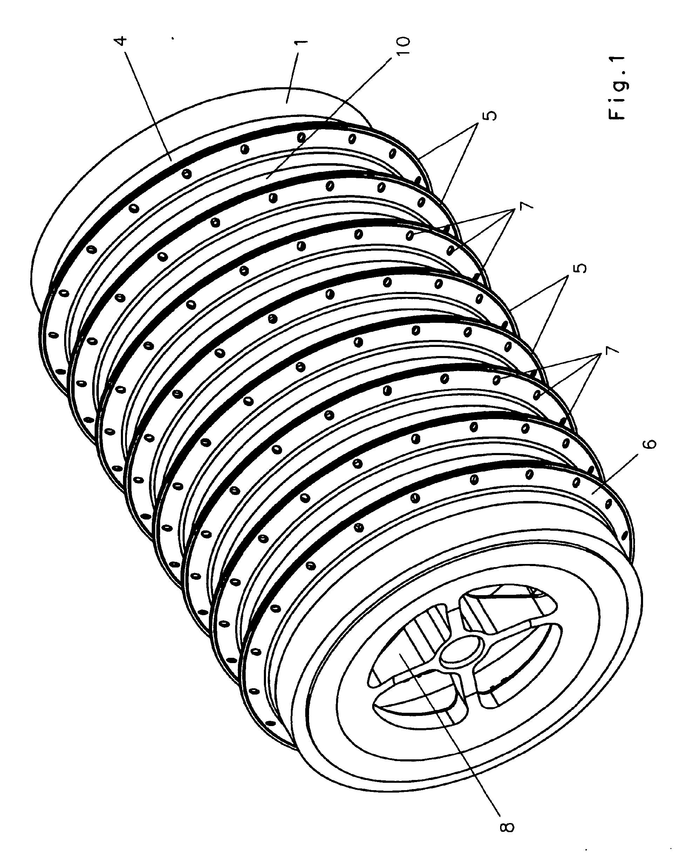

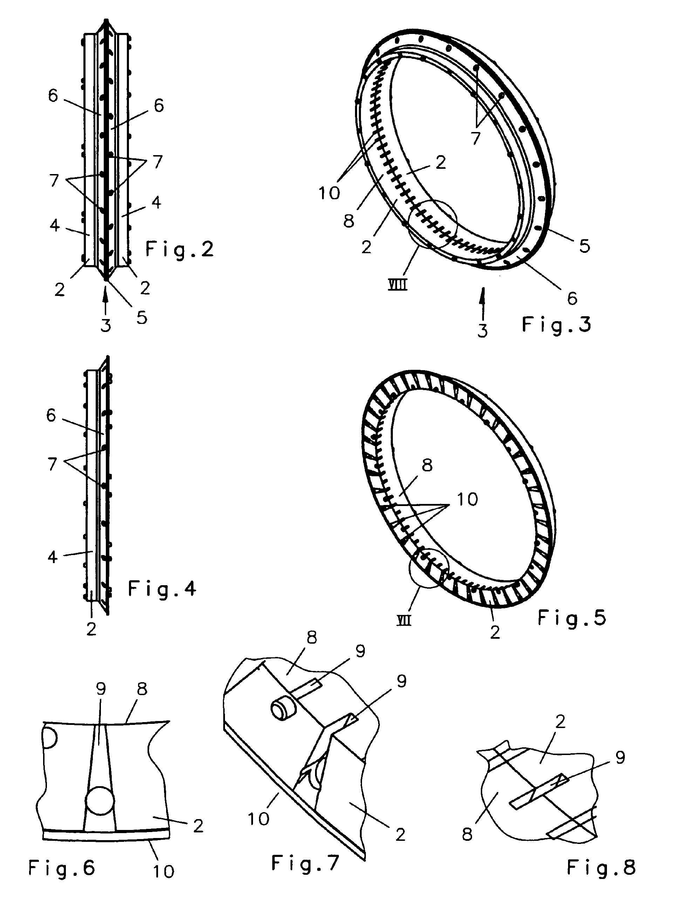

Die Vereinzelungstrommel 1 gemäß Fig. 1 ist in nicht dargestellter Weise drehbar in einem Gehäuse unterhalb eines Saatgutvorratsbehälters einer Einzelkornsämaschine angeordnet. Das Gehäuse bzw. der Saatgutvorratsbehälter weisen zwei voneinander beabstandete Seitenwände auf, die sich parallel zur Bewegungsrichtung der Trommel 1 und somit zumindest annähernd mit der Trommel 1 zusammenwirken. Die Vereinzelungstrommel 1 wird in bekannter Weise mittels eines Antriebes rotierend angetrieben. Die Vereinzelungstrommel 1 besteht aus einzelnen aus Teilsegmenten 2 bestehenden Segmenten 3, die zu einer Vereinzelungstrommel 1 zusammengesetzt sind. Mit in axialer Richtung wirksamen und nicht dargestellten Spannelementen werden diese einzelnen Segmente 3 zusammengehalten. Gemäß dem Ausführungsbeispiel nach Fig. 1 bis 5 weist die Vereinzelungstrommel 1 gegenüber der Trommeloberfläche 4 erhöht ringförmig umlaufende Vereinzelungsgürtel 5 auf, die im Querschnitt dachförmig ausgebildet sind. Wie insbesondere der Fig. 2 zu entnehmen ist, ist der Vereinzelungsgürtel 5 im Querschnitt etwa dreieckförmig ausgebildet. In den beiden Seitendachflächen 6 des Vereinzelungsgürtels 5 sind die Perforationslöcher 7 angeordnet. Die auf beiden Seiten 6 des Vereinzelungsgürtels 5 angeordneten Perforationslöcher 7 sind versetzt zueinander angeordnet, wie insbesondere der Fig. 2 zu entnehmen ist. Die Perforationslöcher 7 münden im mittleren Bereich des aus zwei Teilsegmenten 2 zusammengesetzten Vereinzelungssegmentes 3 in zu der Trommelinnenseite 8 offenen Verbindungskanälen 9. Die Ausgestaltung dieser Verbindungskanäle 9 wird weiter unten erläutert. Die Perforationen 7 werden mit einer Druckdifferenz beaufschlagt, welche von einem Gebläse, welches nicht dargestellt ist, erzeugt wird. Mittels dieses Gebläses ist für die Perforationen 7 eine Druckdifferenz zwischen dem Innenraum 8 der Vereinzelungstrommel 1 und dem Außenbereich 10 der Vereinzelungstrommel 1 zu erzeugen. Diese Druckdifferenz ist derart, so dass, wenn die Trommel 1 mit ihrer Außenseite 10 durch einen Saatgutvorrat geführt wird, dass sich an den Perforationen 7 auf der Außenseite 10 des Vereinzelungsgürtels 5 Samenkörner anlagern.

Den Perforationen 7 eines Vereinzelungsgürtels 5 ist eine von der Vereinzelungstrommel 1 zu der Ablageeinrichtung, die beispielsweise als Säschar ausgebildet ist, führende Ausbringleitung in nicht dargestellter Weise zugeordnet. Durch die versetzte Anordnung der Perforationen 7 eines Vereinzelungsgürtels 5 wird ein größerer Abstand von Perforation 7 zu Perforation 7 geschaffen, so dass sich die Samenkörner in verbesserter Weise an den Perforationen 7 anlagern können, so dass eine verbesserte Vereinzelung als bei der Anordnung der Perforation in einer flächigen Trommel erreicht wird.

Die Verbindungskanäle 9 der Perforationen 7 von der Außenseite 10 der Trommel 1 zur Innenseite 8 der Trommel 1 weisen von der Vereinzelungsseite der Perforation 7 bzw. der Trommel 1 abgewandten Seite 8 einen sich verjüngenden Querschnitt auf, so dass mit einem Druckunterbrechungseinrichtung, die auf der Innenseite 8 der Trommel 1 zur Anlage kommt, die Druckdifferenz sehr schnell unterbrochen wird, so dass sich die Samenkörner wesentlich definierter von den Perforationen 7 bzw. der Vereinzelungstrommel 1 lösen können und wesentlich vergleichmäßigter in die Ausbringleitung gelangen, so dass eine wesentlich bessere vergleichmäßigte Ablage des Saatgutes durch die Ablageeinrichtung der Einzelkornsämaschine gewährleistet ist. Den sich verjüngenden Querschnitt erkennt man in den Fig. 6 bis 8, wobei die Fig. 7 die Einzelheit VII aus der Fig. 5 und die Fig. 8 die Einzelheit VIII aus der Fig. 3 zeigt.

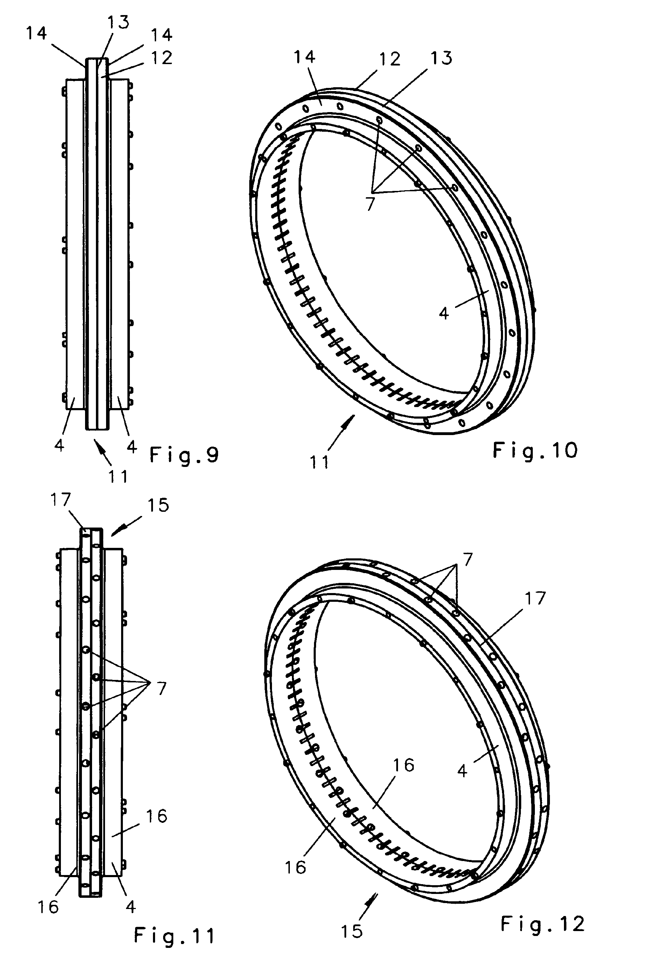

Die Fig. 9 und 10 zeigen Vereinzelungssegmente 11, die ebenfalls bei einer Vereinzelungstrommel 1 entsprechend Fig. 1 zusammengesetzt werden können. Diese aus den Vereinzelungssegmenten 11 gemäß Fig. 9 und 10 zusammengesetzte Vereinzelungstrommel weist ebenfalls einen erhöht ringförmig umlaufenden Vereinzelungsgürtel 12 auf. Dieser Vereinzelungsgürtel 12 weist eine erhöht parallel zur Trommeloberfläche umlaufende Ringfläche 13 auf. Weiterhin weist dieser Vereinzelungsgürtel 12 zwei seitlich aus der Trommeloberfläche 4 herausragende Seitenflächen 14 auf. In den Seitenflächen 14 sind die Perforationslöcher 7 angeordnet. Die Perforationslöcher 7 in den gegenüberliegenden Seitenflächen 14 sind versetzt zueinander angeordnet. Die Seitenflächen 14 verlaufen parallel zueinander zu. Es ist auch möglich, dass die Seitenflächen 14 aufeinander zulaufen und in eine abgeflachte oder ringförmige Fläche münden. Der Abstand zwischen den einzelnen Vereinzelungsgürteln 12 ist größer als das Maß, um welches die Vereinzelungsgürtel 12 aus der Trommeloberfläche 4 herausragen.

Die Vereinzelungssegmente 15 gemäß den Fig. 11 und 12 lassen sich ebenfalls zu einer Vereinzelungstrommel 1 entsprechend Fig. 1 zusammensetzen. Diese Teilsegmente 16 weisen eine erhöht parallel zur Trommeloberfläche 4 umlaufende Ringfläche 17 auf. In der Ringfläche 17 sind die Perforationslöcher angeordnet. In der Ringfläche 17 sind, wie die Fig. 11 und 12 zeigen, zwei Perforationsreihen für eine vereinzelnde Saatreihe angeordnet. Die Perforationslöcher 7 der beiden Perforationsreihen einer Ringfläche 17 sind versetzt zueinander angeordnet, wie Fig. 11 und 12 zeigen.

## Patentansprüche

1. Pneumatische Einzelkornsämaschine mit einem Saatgutvorratsbehälter und zumindest einer drehbar angeordneten Vereinzelungstrommel, in deren Umfangsfläche kreisförmig und beabstandet zueinander angeordnete Perforationsreihen angebracht sind, einem Gebläse, mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen der perforierten Trommel Samenkörner anlagern, wobei der Saatgutvorratsbehälter zwei von einander beabstandete Seitenwände aufweist, die sich parallel zur Bewegungsrichtung der Trommel erstrecken und damit der Trommel zumindest annähernd abdichtend zusammenwirken, **dadurch gekennzeichnet, dass** die Vereinzelungstrommel (1) gegenüber der Trommeloberfläche (4) im Bereich der Perforationsreihen erhöht ringförmig umlaufende Vereinzelungsgürtel (5, 12, 17) aufweist.

2. Einzelkornsämaschine nach Anspruch 1, **dadurch gekennzeichnet, dass** die Vereinzelungsgürtel (5) im Querschnitt dachförmig ausgebildet sind, dass in beiden Seitendachflächen (6) die Perforationslöcher (7) angeordnet sind.

3. Einzelkornsämaschine nach Anspruch 2, **dadurch gekennzeichnet, dass** die auf beiden Seiten des Vereinzelungsgürtels (5) angeordneten Perforationslöcher (7) versetzt zueinander angeordnet sind.

4. Einzelkornsämaschine nach Anspruch 1, **dadurch gekennzeichnet, dass** die Vereinzelungsgürtel (17) eine erhöht parallel zur Trommeloberfläche (4) umlaufende Ringfläche (17) aufweisen, dass in der Ringfläche (17) die Perforationslöcher (7) angeordnet sind.

5. Einzelkornsämaschine nach Anspruch 4, **dadurch gekennzeichnet, dass** in der Ringfläche (17) zwei Perforationsreihen für eine vereinzelte Saatreihe angeordnet ist, dass die Perforationslöcher (7) der beiden Perforationsreihen einer Ringfläche (17) versetzt zueinander angeordnet sind.

6. Einzelkornsämaschine nach Anspruch 1, **dadurch gekennzeichnet, dass** die Vereinzelungsgürtel (12) zwei seitlich aus der Trommeloberfläche (4) herausragende Seitenflächen (14) aufweisen, dass in den Seitenflächen (14) die Perforationslöcher (7) angeordnet sind, dass die Perforationslöcher (7) versetzt zueinander angeordnet sind.

7. Einzelkornsämaschine nach Anspruch 6, **dadurch gekennzeichnet, dass** die Seitenflächen (14) parallel zueinander verlaufen.

8. Einzelkornsämaschine nach Anspruch 6, **dadurch gekennzeichnet, dass** die Seitenflächen aufeinander zu verlaufen und in eine abgeflachte oder ringförmige Fläche münden.

9. Einzelkornsämaschine nach einem oder mehreren der vorstehenden Ansprüche, **dadurch gekennzeichnet, dass** der Abstand zwischen den einzelnen Vereinzelungsgürteln (12) größer ist als das Maß um welches die Vereinzelungsgürtel (12) aus der Trommeloberfläche (4) herausragen.

10. Einzelkornsämaschine nach einem oder mehreren der vorstehenden Ansprüche, **dadurch gekennzeichnet, dass** den Perforationsreihen (7) eines Vereinzelungsgürtels (5,12,17) ein von der Vereinzelungstrommel (1) zu der Ablageeinrichtung der Einzelkornsämaschine führende Ausbringleistung zugeordnet ist.

## Claims

1. Pneumatic single grain dispensing seed drill, having a seed storage vessel and at least one rotatably disposed sorting drum, in the circumferential face of which are provided perforation rows disposed in a circular manner and at a spacing from one another, a blower by means of which a pressure difference between the interior of the sorting drum and the external region of the sorting drum can be produced so that, when the sorting drum is conducted through the seed store, seed grains accumulate at the perforations of the perforated drum, the seed storage vessel having two lateral walls, spaced apart from each other, which extend parallel to the direction of movement of the drum and co-operate with the drum in an at least approximately sealing manner, **characterised in that** the sorting drum (1) has sort belts (5, 12, 17) which circulate relative to the drum surface (4) in the region of the perforation rows in an increasingly annular manner.

2. Single grain dispensing seed drill according to claim 1, **characterised in that** the sort belts (5) have a roof-shaped cross-section, and **in that** the perforation holes (7) are disposed in the two lateral roof faces (6).

3. Single grain dispensing seed drill according to claim 2, **characterised in that** the perforation holes (7), disposed on the two sides of the sorting belt (5), are disposed in an offset manner relative to one another.

4. Single grain dispensing seed drill according to claim 1, **characterised in that** the sort belts (17) have an annular face (17), which extends in an increased manner parallel to the drum surface (4), and **in that** the perforation holes (7) are disposed in the annular face (17).

5. Single grain dispensing seed drill according to claim 4, **characterised in that** two perforation rows for one singled-out row of seeds are disposed in the annular face (17), and **in that** the perforation holes (7) of the two perforation rows of one annular face (17) are disposed in an offset manner relative to one another.

6. Single grain dispensing seed drill according to claim 1, **characterised in that** the sort belts (12) have two lateral faces (14), which protrude laterally from the drum surface (4), **in that** the perforation holes (7) are disposed in the lateral faces (14), and **in that** the perforation holes (7) are disposed in an offset manner relative to one another.

7. Single grain dispensing seed drill according to claim 6, **characterised in that** the lateral faces (14) extend parallel to each other.

8. Single grain dispensing seed drill according to claim 6, **characterised in that** the lateral faces extend towards one another and terminate in a flattened or annular face.

9. Single grain dispensing seed drill according to one or more of the preceding claims, **characterised in that** the spacing between the individual sort belts (12) is greater than the dimension by which the sort belts (12) protrude from the drum surface (4).

10. Single grain dispensing seed drill according to one or more of the preceding claims, **characterised in that** a distribution yield, which extends from the sorting drum (1) to the depositing means of the single grain dispensing seed drill, is associated with the perforation rows (7) of a sort belt (5, 12, 17).

## Revendications

1. Semoir monograine pneumatique comportant un réservoir d'alimentation en semence et au moins un tambour de séparation, monté à rotation, et dont la surface périphérique comporte des rangées de perforations réparties en cercle et écartées les unes des autres, une machine soufflante qui crée une différence de pression entre le volume intérieur du tambour séparateur et la zone extérieure du tambour de façon que lorsque le tambour séparateur passe dans la réserve de semence, des graines de semence se fixent sur les perforations du tambour,
le réservoir d'alimentation en semence comportant deux parois latérales écartées l'une de l'autre, s'étendant parallèlement à la direction de déplacement du tambour et coopérant ainsi avec le tambour pour assurer au moins sensiblement l'étanchéité,
**caractérisé en ce que**
le tambour séparateur (1) comporte des ceintures de séparation (5, 12, 17), périphériques, relevées en forme d'anneaux, par rapport à la surface supérieure (4) du tambour dans la région des rangées de perforations.

2. Semoir monograine selon la revendication 1,
**caractérisé en ce que**
les ceintures de séparation (5) ont en section une forme de toit de façon que les deux surfaces latérales (6) du toit comportent les orifices de perforations (7).

3. Semoir monograine selon la revendication 2,
**caractérisé en ce que**
les orifices de perforations (7) des deux côtés de la ceinture de séparation (5) sont décalés.

4. Semoir monograine selon la revendication 1,
**caractérisé en ce que**
les ceintures de séparation (5) ont une surface annulaire (17), périphérique, relevée parallèlement à la surface (4) du tambour de façon que les orifices de perforations (7) soient réalisés dans la surface annulaire (17).

5. Semoir monograine selon la revendication 4,
**caractérisé en ce que**
la surface annulaire (17) comporte deux rangées de perforations pour une rangée de graines de semence, séparée, de façon que les orifices de perforations (7) des deux rangées de perforations d'une surface annulaire (17) soient décalés l'un par rapport à l'autre.

6. Semoir monograine selon la revendication 1,
**caractérisé en ce que**
les ceintures de séparation (12) comportent deux surfaces latérales (14) qui dépassent latéralement par rapport à la surface (4) du tambour et les surfaces latérales (14) comportent les orifices de perforations (7) de façon que ces orifices de perforations (7) soient décalés.

7. Semoir monograine selon la revendication 6,
**caractérisé en ce que**
les surfaces latérales (14) sont parallèles les unes aux autres.

8. Semoir monograine selon la revendication 6,
**caractérisé en ce que**
les surfaces latérales se rejoignent et arrivent dans une surface aplatie ou annulaire.

9. Semoir monograine selon l'une des revendications précédentes,
**caractérisé en ce que**
la distance entre les différentes ceintures de séparation (12) est supérieure à la hauteur selon laquelle les ceintures de séparation (12) dépassent de la surface (4) du tambour.

10. Semoir monograine selon l'une des revendications précédentes,
**caractérisé en ce qu'**
aux rangées de perforations (7) d'une ceinture de séparation (5, 12, 17) est associé un débit allant du tambour de séparation (1) vers l'installation de dépose du semoir monograine.
